(19) Europäisches Patentamt
European Patent Office
Office européen des brevets

(11) **EP 4 411 572 B1**

(12) **EUROPÄISCHE PATENTSCHRIFT**

(45) Veröffentlichungstag und Bekanntmachung des
Hinweises auf die Patenterteilung:
**01.04.2026   Patentblatt 2026/14**

(21) Anmeldenummer: **23154805.8**

(22) Anmeldetag: **02.02.2023**

(51) Internationale Patentklassifikation (IPC):
*G06F 18/25* (2023.01)          *G06F 18/21* (2023.01)
*G06F 18/40* (2023.01)          *G06V 20/54* (2022.01)
*G08G 1/01* (2006.01)           *G06N 20/20* (2019.01)
*G08G 1/04* (2006.01)           *G08G 1/042* (2006.01)
*G08G 1/052* (2006.01)

(52) Gemeinsame Patentklassifikation (CPC):
**G06F 18/2178; G06F 18/256; G06F 18/41;
G06N 20/20; G06V 20/54; G08G 1/0116;
G08G 1/0133; G08G 1/04; G08G 1/042;** G06N 5/01;
G06N 7/01; G06N 20/10; G08G 1/0145;
G08G 1/052

(54) **TUNNELSENSORFUSION**

TUNNEL SENSOR FUSION

FUSION DE CAPTEUR DE TUNNEL

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**

(43) Veröffentlichungstag der Anmeldung:
**07.08.2024   Patentblatt 2024/32**

(73) Patentinhaber: **Autobahnen- und
Schnellstrassen-Finanzierungs-
Aktiengesellschaft
1030 Wien (AT)**

(72) Erfinder: **Harbauer, Dietmar
6020 Innsbruck (AT)**

(74) Vertreter: **Schwarz & Partner Patentanwälte
GmbH
Patentanwälte
Wipplingerstraße 30
1010 Wien (AT)**

(56) Entgegenhaltungen:
**EP-A2- 1 376 510**

• **GRAF FRANZ: "AKUT - Rapid incident detection
in tunnels through acoustic monitoring",
INCIDENTDETECTIE METHODIEKEN IN
EUROPESE TUNNELS, 2 June 2021 (2021-06-02),
pages 1 - 23, XP093047500**
• **PIARC WORLD ROAD ASSOCIATION: "ROAD
TUNNELS MANUAL - Ch. 8. EQUIPMENT AND
SYSTEMS", 25 September 2011 (2011-09-25),
XP055114369, Retrieved from the Internet
<URL:http://tunnels.piarc.org/tunnels/
ressources/3/257,
Chap-8-Equipment-and-systems-EN-v-21.pdf>
[retrieved on 20140416]**
• **TECHNICAL COMMITTEE 5 ROAD TUNNELS:
"Traffic Incident Management Systems used in
Road Tunnels - 05.15.BEN", ROAD SAFETY /
ROAD TUNNEL OPERATIONS, 2004, pages 1 - 64,
XP093047435, ISBN: 978-2-84060-159-3,
Retrieved from the Internet <URL:https://www.
piarc.org/ressources/publications/2/
4489,05-15-VCD.pdfT> [retrieved on 20230516]**

**Beschreibung**

Die Erfindung betrifft ein Verfahren zum Trainieren eines Ereignis-Klassifikators zur Verwendung in einem Verfahren zur Sensorfusion von Sensoren in Straßentunnel sowie ein Verfahren zur Sensorfusion von Sensoren in Straßentunnel.

HINTERGRUND DER ERFINDUNG

Ereignisse wie z.B. Unfälle oder Brände in Straßentunnel können besonders schlimme Folgen haben. Um diese Ereignisse möglichst schnell erkennen und angemessen reagieren zu können, sind Straßentunnel den Richtlinien entsprechend mit verschiedensten Sensoren ausgestattet. Diese Sensoren haben aufgrund ihrer physikalischen Messprinzipien unterschiedliche Vor- und Nachteile, die zu Problemen wie Nicht-Detektion von Ereignissen, hohen Detektionszeiten und/oder Fehlalarmen führen.

Zur Überwachung von Straßentunnel kommen sehr viele unterschiedliche Sensoriken zum Einsatz. Jedes Sensorsystem funktioniert hierbei innerhalb der gesteckten Anforderungsziele und erfüllt eine definierte Detektions- bzw. Fehldetektionsrate (auch Sensitivität und Spezifität genannt). Da die einzelnen Systeme jedoch entkoppelt sind, d.h. unabhängig voneinander die jeweiligen Ereignistypen analysieren, addieren sich statistisch z.B. die Fehlalarmraten mit jedem weiteren Subsystem. In einer gekoppelten Betrachtung durch die Fusion von einzelnen Sensordaten erhöht sich die Anzahl unabhängiger Eingangswerte für ein zu detektierendes Ereignis und führt somit zu einer Reduzierung der Fehlalarmrate bzw. Verbesserung der Zuverlässigkeit für die Detektion eines Ereignisses. Dabei können sich die unterschiedlichen Sensormodalitäten in Bezug auf die Relevanz der Ereignisinformationen verstärken.

Um die Anforderungen an eine Sensorfusionsalgorithmik für einen Straßentunnel am höherrangigen Straßennetz definieren zu können, ist es erforderlich die unterschiedlichen Ereignistypen zu definieren und daraus dann die notwendigen Fusionsalgorithmen abzuleiten. Im Folgenden werden daher Beispiele von für Tunnel typische Ereignisarten sowie Möglichkeiten zu deren Erfassung kurz beschrieben.

Das Ereignis überhöhte Geschwindigkeit von Fahrzeugen im Tunnel ist immer wieder Ursache von schweren Unfällen. Überhöhte Geschwindigkeit kann mittels Sensoren wie Radar oder Laser Sensoren bzw. mittels Videodetektion erfasst werden.

Aufgrund einer hohen Verkehrsdichte bzw. von stockendem Verkehr im Tunnel, steigt die Anzahl potenziell betroffener Personen im Fall eines Brandes bzw. eines Ereignisses mit einer Gefahrgutfreisetzung. Hohe Verkehrsdichte kann mittels Videodetektion, Induktionsschleifen und Radar/Laser Sensoren ermittelt werden.

Ein Stau im Tunnel, ein stillstehendes Fahrzeug oder auch ein langsames Fahrzeug stellt eine besondere Gefährdung dar, da durch nachfolgende Verkehrsteilnehmer ein Stauende bzw. das langsame/stillstehende Fahrzeug ggf. nicht rechtzeitig erkannt wird und somit die Gefahr von Auffahrunfällen besteht. Ein Stau kann ebenfalls mittels Videodetektion, Induktionsschleifen und Radar/Laser Sensoren erkannt werden.

Eine Belegung der Pannenbucht muss ebenfalls sofort von Sensoren im Tunneln erkannt werden, beispielsweise kann dies durch Videodetektion oder Induktionsschleifen erfolgen.

Als Falschfahrer bzw. Geisterfahrer werden Fahrzeuge bezeichnet, die sich auf einer Fahrspur oder einem Fahrstreifen entgegen der vorgeschriebenen Fahrtrichtung bewegen. Dies stellt ein schwerwiegendes Ereignis dar, das zur Gefährdung anderer Verkehrsteilnehmer führen kann. Das Ereignis kann mittels Videodetektion, Induktionsschleifen und Radar/Laser Sensoren erkannt werden.

Fahrbahnfremde Gegenstände, wie beispielsweise verlorene Ladungen, oder Menschen bzw. Tiere auf der Fahrbahn oder dem Pannenstreifen können mittels Videodetektion ermittelt werden.

Die Höhenkontrolle dient zum Schutz der an den Tunneldecken installierten betriebs- und sicherheitstechnischen Einrichtungen vor überhohen Fahrzeugen. Die Höhenkontrolle kann mittels Wechsellichtschranken + Induktionsschleife, Laser Reflektions-Lichtschranken (Laser-Sensor), Infrarot Einweg-Lichtschranken (1 Sender und 1 Empfänger) oder Infrarot Doppel-Lichtschranken (2 Sender und 2 Empfänger) durchgeführt werden.

Eine glatte Fahrbahn, welche überfrierende Nässe aufgrund von Schleppwassereintrag oder eindringendes Berg- oder Grundwasser die Verkehrssicherheit stark beeinträchtigen kann, wird mittels Umweltdatenerfassung oder Temperaturfühler erkannt.

Unfälle oder Kollisionen stellen ein äußerst schwerwiegendes Ereignis in Tunnel dar und erfordern das umgehende Einleiten von Verkehrssteuerungs-, Sicherungs- und Rettungsmaßnahmen. Sie können mittels Akustischer Unfalldetektion (AKUT) oder Videodetektion von Stillstand bzw. Objekt auf der Fahrbahn ermittelt werden.

Fahrzeugbrände bzw. Feuer in Tunnel stellen aufgrund der Rauch- und Wärmeentwicklung eine außerordentliche Bedrohung für die Tunnelnutzer dar. Durch Rauchdetektion können sie frühzeitig erkannt werden. Sensoriken zur Erkennung der Brände umfassen Linienbrandmeldekabel (= Temperaturmesswerte), Videodetektion Brand-/Rauchdetektion, Rauchmelder, Trübsichtmessgeräte, Betätigung des Handgefahrenmelders Brand, Entnahme eines Feuerlöschers oder das Absetzen eines Notrufs. Bei einer Gefahrgutfreisetzung kann zusätzlich noch ein Gefahrgutplakettenleser eingesetzt werden.

Bei einer NO$_X$(Stickoxide)-Grenzwertüberschreitung oder einer CO (Kohlenmonoxid)-Grenzwertüberschreitung können zur Ermittlung NO$_X$- bzw. CO-Messanlagen verwendet werden.

Zusammengefasst finden sich in heutigen Tunnel demnach eine Vielzahl verschiedenartiger Sensoren, welche unter anderem die oben angeführten Beispiele von Ereignissen detektieren. Diese Sensorsysteme liefern im allgemeinen Fall zu verschiedenen Zeitpunkten Alarme zu den vordefinierten Ereignissen. Dabei kann es aufgrund von fehlerhaften Messdaten bei Einzelsensoren zu sogenannten Fehlalarmen kommen. Eine logische Verknüpfung von Sensorergebnissen alleine ist dabei nicht ausreichend. Beispielsweise kann ein Fahrzeug durch ein Videosystem oder eine Induktionsschleife detektiert werden. Beide Systeme weisen Fehler im Sinne von Falsch-Negativen [FN] (= nicht erkannte, aber vorhandene Fahrzeuge) sowie Falsch-Positiven [FP] (= erkannte, aber nicht vorhandene Fahrzeuge) auf. Durch eine logische Verknüpfung im Sinn eines "UND" könnte zwar ein Teil der FP als solcher erkannt werden, allerdings würden sich die FN beider Sensoren addieren. Im Falle einer "ODER"-Verknüpfung würden die FN reduziert, während sich die FP addierten. Beide Fälle würden daher zu keiner Verbesserung der Detektionsleistung führen. Einen Ausweg bieten probabilistische, d. h. auf der Wahrscheinlichkeitslehre beruhende Verfahren, welche die Detektionseigenschaften jedes Sensors in einem so genannten Sensormodell wahrscheinlichkeitstheoretisch abbilden und dabei Abhängigkeiten von weiteren Größen berücksichtigt. So kann die FP-Rate eines Videosystems von der Beleuchtung abhängen, während eine Induktionsschleife durch Nässe, Schnee und elektrische Störfelder verfälschte Ergebnisse liefern kann. Eine probabilistische Datenfusion berücksichtigt daher die individuelle Wahrscheinlichkeit jedes Detektionsergebnisses und kann damit die Detektionsleistung des Gesamtsystems signifikant erhöhen. Für die probabilistische Datenfusion müssten jedoch folgende Bedingungen erfüllt sein:

- Die Einbauposition der Tunnelsensoren müsste exakt bekannt sein, um das physikalische Messmodell zu implementieren.
- Die Statistik der Sensormessungen (Sensorrauschen) müsste bekannt sein oder sich zumindest ermitteln lassen. Da die Sensoren aber meistens nur eine Detektion im Falle eines erkannten Ereignisses liefern, ist diese Information nicht ohne weiteres zu rekonstruieren.
- Die Sensordaten müssten exakte und synchronisierte Zeitstempel enthalten um den Systemzustand der Datenfusion mit Hilfe des Systemmodels korrekt in der Zeit zu prädizieren.

Diese Voraussetzung können jedoch bei den meisten Straßentunnelkonfigurationen nicht erfüllt werden. Daher ist eine probabilistische Datenfusion für Straßentunnel ungeeignet.

Eine Alternative hierzu bildet die merkmalsbasierte Datenfusion mittels Algorithmen aus dem Bereich maschinelles Lernen. Dabei werden Klassifikatoren trainiert, welche es ermöglichen, Ereignisse im Straßentunnel zu erkennen. Der wesentliche Schritt dabei ist das Training der Klassifikatoren, welches im Stand der Technik bislang nur mit erheblichen Mengen von Trainingsdaten funktioniert, wobei die Trainingsdaten vorab von Bedienern bewertet werden müssen. Dies resultiert in einem erheblichen Arbeitsaufwand vor Einsatz der merkmalsbasierten Datenfusion.

Ein System zur automatischen Überwachung eines Verkehrsweges wie eines Tunnels wird in EP 1 376 510 A2 offenbart. Dabei werden von Mikrophonen im Tunnel aufgenommene Schallsignale mithilfe einer Einheit zur spektralen Analyse und Klassifikation automatisch bewertet. Das System erlaubt somit nur die Analyse von Schallsignalen und nicht der oben angegebenen anderen wichtigen Signale, welche von den verschiedenen Sensoren in Straßentunnel aufgenommen werden.

KURZE BESCHREIBUNG DER ERFINDUNG

Der Erfindung liegt daher die Aufgabe zugrunde eine Fusion der Sensoren in Straßentunnel anhand von Klassifikatoren zu ermöglichen, wobei die Klassifikatoren auf einfache und effiziente Weise angelernt werden können und somit gefährliche Ereignisse schneller und zuverlässiger erkennen können.

Gelöst wird diese Aufgabe durch ein Verfahren zum Trainieren eines Ereignis-Klassifikators zur Verwendung in einem Verfahren zur Sensorfusion von Sensoren in Straßentunnel umfassend die Schritte:

- Empfangen von Sensordaten von einer Vielzahl von Sensoren in einem Straßentunnel über einen Zeitraum, wobei die Sensordaten detektierte Ereignisse im Straßentunnel umfassen, wobei im Straßentunnel n verschiedene Ereignisse mit der Vielzahl von Sensoren detektierbar sind,
- Erstellen eines n-dimensionalen Merkmalsvektors, wobei jede Dimension des Merkmalsvektors der Detektionsanzahl eines Ereignisses entspricht,
- Klassifikation des Merkmalsvektors durch n als Machine-Learning-Algorithmus ausgebildete Ereignis-Klassifikatoren,
- Bewerten der Klassifikation als richtig oder falsch durch einen Bediener über eine Bedienerschnittstelle,

- Lernen der n Ereignis-Klassifikatoren basierend auf der bewerteten Klassifikation.

Die rohen Messdaten der verschiedenen Tunnelsensoren liegen nach dem Export in einer zeitgestempelten Form bereit. Um den Ansatz der merkmalsbasierten Datenfusion mit Klassifikation durchzuführen, ist es im Anlernprozess in der Regel notwendig, dem zu trainierenden Klassifikator sowohl Messdaten, die der Klasse zugehören, als auch Messdaten die nicht der Klasse entsprechen, vorzulegen. Wenn man Beispielsweise einen Klassifikator zum Erkennen von langsam fahrenden Fahrzeugen trainieren möchte, müssen sowohl Geschwindigkeitsmessungen mit niedriger Geschwindigkeit (Positive) als auch Geschwindigkeitsmessungen mit normaler oder hoher Geschwindigkeit (Negative) vorliegen. Dieses Verfahren lässt sich auf mehrere Merkmale ausdehnen. Dabei ist allerdings zu berücksichtigen, dass mit der Erweiterung des Merkmalsvektors auch die Anzahl der notwendigen Testdaten ansteigt. Das Verhältnis ist dabei in der Regel nicht linear, d.h. mit zunehmender Länge des Merkmalsvektors müssen überproportional mehr gelabelte Trainingsdaten vorliegen. Durch das erfindungsgemäße Verfahren zum Training des Ereignis-Klassifikators müssen keine gelabelten Trainingsdaten mehr vorliegen, was das Trainieren des Machine-Learning-Algorithmus stark vereinfacht. Durch die Bedienerschnittstelle kann ein Bediener in Echtzeit die Klassifikation bewerten und somit den Ereignis-Klassifikator trainieren, ohne dass gelabelte Trainingsdaten vorliegen. Die Bewertung kann dabei auch im Nachhinein erfolgen, indem auf Kamerabilder des Videodetektors in dem entsprechenden Zeitraum zurückgegriffen wird.

Für den n-dimensionalen Merkmalsvektor ist es in einem ersten Schritt unerheblich, ob die im Merkmalsvektor zusammengefassten Einzelereignisse korreliert bzw. aussagekräftig sind. Aufgabe des erfindungsgemäßen Verfahrens ist es, genau diese Zusammenhänge im Merkmalsvektor herauszufinden und durch geeignete Trennmechanismen zu realisieren. Zur Erstellung des Merkmalsvektor kann über den vorab bestimmten Zeitraum gemäß einem Sliding Window Ansatz die Anzahl der Alarme aller Sensoren im Straßentunnel gezählt werden. Dabei entspricht eine Dimension des Merkmalsvektors der Anzahl aller ausgelösten Alarme einer Sensorgruppe (z.B. Falschfahrer), das heißt der Detektionsanzahl eines Ereignisses im betrachteten Zeitraum. Indem alle Sensoren im Tunnel berücksichtigt werden, kann die Genauigkeit erhöht werden, da z.B. ein tatsächlicher Falschfahrer im Mittel im Tunnel von mehreren unterschiedlichen Sensoren an unterschiedlichen Orten detektiert wird. Ein Beispiel eines Merkmalsvektors könnte folgendermaßen lauten:

$$V = (\#Falschfahrer, \#Langsames\ Fahrzeug, \#Rauchentwicklung, \#Stau)^T$$

Ein beobachteter Merkmalsvektor im Falle eines Geisterfahrers im Tunnel über einen Zeitraum von t=30s könnte dann folgende Ausprägung haben:

$$V = (2,3,0,0)^T$$

Das heißt es wurden innerhalb von 30s zwei Falschfahrer-Ereignisse und drei Langsamfahrer-Ereignisse detektiert.

Nach dem Anlernen der Ereignis-Klassifikatoren gemäß erfindungsgemäßem Verfahren sind diese in der Lage, auf Basis eines solchen Merkmalsvektors zu evaluieren, ob das zu testende Ereignis gerade eingetreten ist oder nicht. Beispielsweise würde der Klassifikator für Falschfahrer für obiges Beispiel ergeben, dass das Ereignis Falschfahrer tatsächlich eingetreten ist.

In einer Ausführungsvariante bewertet der Bediener die Klassifikation anhand eines Ereignis-Videos. Das Ereignis-Video kann dabei von einem oder mehreren der Videodetektoren im Straßentunnel aufgenommen werden. Der Bediener kann dabei die Klassifikation auch in Echtzeit überprüfen.

Die erfindungsgemäß gestellte Aufgabe wird außerdem gelöst durch ein Verfahren zur Sensorfusion von Sensoren in Straßentunnel umfassend die Schritte:

- Empfangen von Sensordaten von einer Vielzahl von Sensoren in einem Straßentunnel über einen Zeitraum, wobei die Sensordaten detektierte Ereignisse im Straßentunnel umfassen, wobei im Straßentunnel n verschiedene Ereignisse mit der Vielzahl von Sensoren detektierbar sind,
- Erstellen eines n-dimensionalen Merkmalsvektors, wobei jede Dimension des Merkmalsvektors der Detektionsanzahl eines Ereignisses entspricht,
- Klassifikation des Merkmalsvektors durch n trainierte Ereignis-Klassifikatoren,

wobei die Ereignis-Klassifikatoren mittels des oben beschriebenen Verfahrens trainiert werden.

Mit dem erfindungsgemäßen Verfahren lässt sich somit anhand des Ergebnisses der Ereignis-Klassifikatoren angeben, ob und welches Ereignis im Straßentunnel über den bestimmten Zeitraum eingetreten ist. Das Ergebnis jedes der n Ereignis-Klassifikatoren ist dabei die Antwort auf die Frage, ob das vom Klassifikator zu testende Ereignis eingetreten ist oder nicht. Je nach Implementierung des Klassifikators kann die Aussage dabei binär sein (Ja/Nein) oder aber durch eine Wahrscheinlichkeit abgebildet sein. Dieser Prozess kann dann kontinuierlich wiederholt werden und das Ergebnis visualisiert werden. Damit lässt sich die Robustheit gegenüber Falschalarmen, welche bei der Auswertung einzelner Sensoren ohne Fusion sehr häufig auftreten, stark erhöhen. Anhand des erfindungsgemäßen Trainings der Ereignis-Klassifikatoren lässt sich außerdem der Machine-Learning-Algorithmus sehr einfach und umfangreich trainieren.

Des Weiteren kann ein Neareast-Neighbour-Algorithmus, Naive Bayes, eine Support Vector Machine (SVM), Adaptive Boosting, XGBoost, eine lineare Diskriminanzanalyse, Decision Tree oder ein Random Forrest als Machine-Learning-Algorithmus verwendet werden. Nachfolgen dürfen die verschiedenen, beispielhaften Algorithmen kurz beschrieben werden. Es können jedoch auch jegliche andere Algorithmen verwendet werden, welche ein Training des Klassifikators ermöglichen.

Die Nearest-Neighbor-Klassifikation stellt ein probabilistisches Schätzverfahren zum Bestimmen einer Wahrscheinlichkeitsdichtefunktion dar. Der daraus abgeleitete k-Nearest-Neighbor-Algorithmus ist ein parameterfreies Klassifikationsverfahren, welches eine zu untersuchende Stichprobe (z.B. die konkrete Messung von Staudetektion und Brandmeldeanlage zu einem Zeitpunkt t) einer Klasse (z.B. "Stau im Tunnel") zuordnet und dabei die k nächsten Nachbarn berücksichtigt. Der Klassifikator wird mit gelabelten Messdaten (d.h. bekannten Klassenzugehörigkeiten) angelernt, wobei das konkrete Training dann im Abspeichern der Trainingsdaten besteht. Während der Klassifikation wird die Zugehörigkeit zu einer vorab angelernten Klasse dann auf Basis eines Abstandsmaßes (z.B. euklidisch) bestimmt, wobei die Klassenhypothese mit dem kleinsten Abstandsmaß üblicherweise als Ergebnis ausgewählt wird. Es ist erwähnenswert, dass der Nearest Neighbour-Klassifikator im Allgemeinen nicht die besten Ergebnisse liefert. Er dient jedoch meist als Referenzlösung, da er sich mit verhältnismäßig wenig Aufwand implementieren lässt. Zudem kann die Leistungsfähigkeit des Algorithmus bei komplexen Problemen abnehmen, da der Algorithmus relativ schlecht verallgemeinert werden kann.

Eine Support Vector Machine (SVM) ist ein Klassifikationsalgorithmus zum Zuordnen von Stichproben zu einer vorher angelernten Menge von Klassen (Klassen als konkrete Ereignisse z.B. einen Brand im Tunnel zu verstehen). Für die Anlernphase einer SVM ist es notwendig, dass eine ausreichend große Menge von Trainingsdaten mit bekannter Klassenzugehörigkeit vorliegt. Hierfür eignet sich wiederum besonders das erfindungsgemäße Verfahren zum Training des Klassifikators, da in diesem Fall der Aufwand des Vorab-Labelns der Trainingsdaten entfällt. Während des Trainings versucht die SVM dann anhand der vorliegenden Messdaten (d.h. Stichproben die sowohl der zu trainierenden Klasse zugehörig sind als auch nicht) eine Hyperebene (Trennfläche) zu definieren, die diese beiden Klassen (zugehörig und nicht zugehörig) möglichst gut voneinander trennt. Diese Messdaten sollten dabei räumlich möglichst weit weg von der Hyperebene liegen, damit beim späteren Klassifizieren auch Daten korrekt zugeordnet werden, die nicht exakt den Trainingsdaten entsprechen. Sind die Messdaten linear trennbar kann eine lineare SVM-Implementierung genutzt werden. Ist dies nicht der Fall, kommt typischerweise die Nutzung des "Kernel-Tricks" in Frage. Ein typischer Vertreter ist dabei der sogenannte radial basis function (RBF) Kernel .

Decision Trees oder auch Entscheidungsbäume sind ein Verfahren zur Zuordnung von Stichproben aus Messdaten zu einer bekannten Klasse. Ein Decision Tree kann dabei immer nur eine konkrete Frage beantworten (z.B. gehört die gerade beobachtete Abfolge von Messdaten zu dem Ereignis Tunnelbrand?). Decision Trees stellen ein baumartiges Regelwerk dar, das von der Wurzel entlang bis zu einem Blatt (die zu untersuchende Klasse) traversiert wird. Bei jedem dabei auftretenden Knoten wird ein konkretes Merkmal der Stichprobe untersucht und anhand des Ergebnisses eine Entscheidung über den nächsten zu untersuchenden Knoten getroffen. Decision Trees können entweder von Experten manuell aufgestellt oder durch maschinelles Lernen aus gelabelten Messdaten erstellt werden. Dies wird oft als Induktion von Entscheidungsbäumen bezeichnet.

Ein Random Forest ist ein Klassifikationsverfahren, bei dem mehrere Decision Trees parallel genutzt werden. Für die eigentliche Klassifikation wird jeder Decision Tree unabhängig befragt. Die Klasse mit den meisten Stimmen entscheidet letztendlich über das finale Klassifkationsergebnis. Random Forests sind besonders für große Datenmengen, die schnell analysiert und klassifiziert werden müssen von Vorteil.

Adaptive Boosting (kurz AdaBoost) und XGBoost sind Verfahren, bei welchen mehrere sogenannte schwache Klassifikatoren kombiniert werden um einen einzelnen leistungsfähigen Klassifikator zu erzeugen. Schwache Klassifikatoren berücksichtigen dabei meist nur ein Merkmal der Stichprobe und sind dadurch sehr schnell aber auch nicht besonders robust. Durch die Zusammenführung (Boosting) mittels einer Gewichtung kann ein starker Klassifikator erzeug werden. XGBoost ist dabei noch effizienter und schneller als AdaBoost in der Auffindung eines leistungsfähigen Klassifikators.

Das Naive Bayes-Verfahren stellt einen probabilistischen Klassifikator auf Basis des Bayes-Theorems dar. Dabei gilt die Annahme, dass die einzelnen Elemente des Merkmalsvektors (z.B. Brandalarm und Stillstand) für das Ereignis (z.B. Tunnelbrand) unabhängig sind (daher auch der Name naive). Der Hauptvorteil dieses Klassifikationsverfahrens besteht in der relativ niedrigen Anzahl von notwendigen Trainingsdaten um den Klassifikator entsprechend zu trainieren. Für komplexe Zusammenhänge liefert der Naive Bayes-Klassifikator erfahrungsgemäß schlechtere Ergebnisse als komplexere Verfahren wie AdaBoost oder Random Forest.

Die lineare Diskriminanzanalyse (LDA) ist ein Klassifikationsverfahren zum Trennen von Daten in mehrere Klassen. Der Algorithmus prüft dabei auf geeignete und ungeeignete Merkmale des Eingangsvektors und reduziert ggf. die zu betrachtenden Dimensionen. Die Trennung der Klassen wird durch lineare Grenzen realisiert.

Zur Erkennung der möglichen Ereignisse in einem Straßentunnel, können die Vielzahl von Sensoren ausgewählt sein aus der Gruppe umfassend Radar Sensoren, Laser Sensoren, Videodetektoren, Wechsellichtschranken, Induktionsschleifen, Laser Reflektions-Lichtschranken, Infrarot Einweg-Lichtschranken, Infrarot Doppel-Lichtschranken, Temperaturfühler, akustische Unfalldetektoren (AKUT), Linienbrandmeldekabel, Brand-/Rauchdetektionsgeräte, Rauchmelder, Trübsichtmessgeräte, Gefahrgutplakettenlesegeräte, CO-Messgeräte, NOx-Messgeräte.

Die Erfindung betrifft auch ein System, umfassend einen Computer, der dazu programmiert ist, die erfindungsgemäßen Verfahren durchzuführen. Hierfür werden dem Computer die Sensordaten übergeben, welcher anhand dieser Sensordaten den Merkmalsvektor erstellen kann und mithilfe von diesem einerseits das Training der Ereignis-Klassifikatoren, in Zusammenspiel mit der Bedienerschnittstelle, welche entweder Teil des Computers ist oder mit dem Computer gekoppelt ist, und andererseits mit den trainierten Ereignis-Klassifikatoren die Klassifikation der Sensordaten durchführen kann.

AUSFÜHRLICHE BESCHREIBUNG DER ERFINDUNG

Weitere Vorteile und Details der Erfindung werden nachfolgend anhand der folgenden Figuren und Figurenbeschreibungen erläutert.

Dabei zeigt:

Fig. 1 ein Blockdiagramm einer Sensorfusion von Sensoren in Straßentunnel;
Fig. 2 einen Ablaufplan zur Durchführung des Lernprozesses der Ereignis-Klassifikatoren, welche für eine Sensorfusion von Sensoren in Straßentunnel verwendet werden können;
Fig. 3 eine schematische Darstellung eines Nutzerinterfaces, auf welchem die Ergebnisse einer durchgeführten Sensorfusion dargestellt werden können.

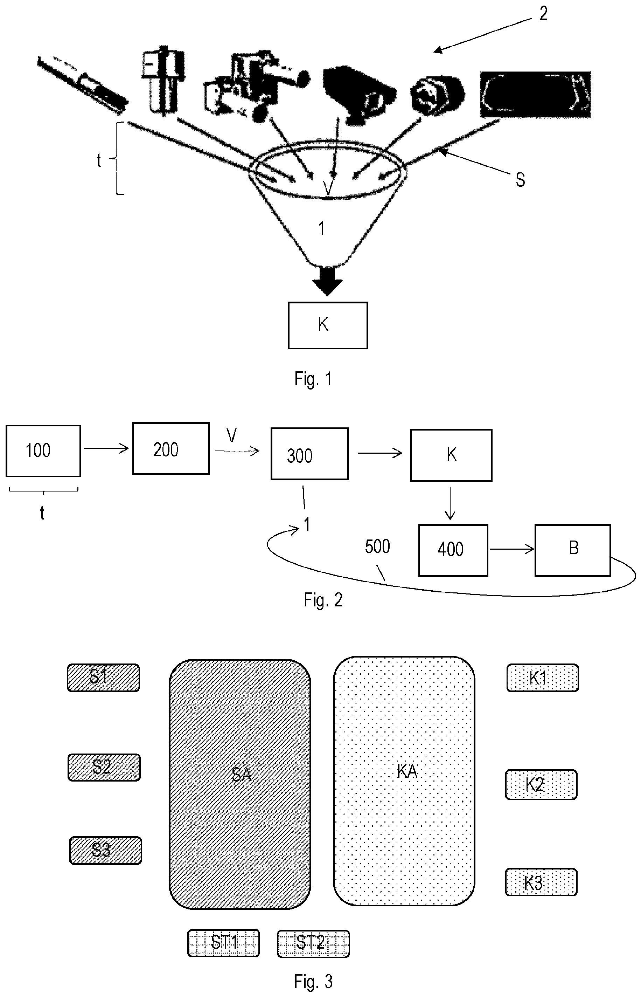

Wie in Fig. 1 dargestellt werden beim erfindungsgemäßen Verfahren zur Sensorfusion von Sensoren 2 in Straßentunnel in einem ersten Schritt Sensordaten S von einer Vielzahl von Sensoren 2 in einem Straßentunnel über einen Zeitraum t empfangen. Die Sensordaten S umfassen detektierte Ereignisse im Straßentunnel, wobei im Straßentunnel n verschiedene Ereignisse mit der Vielzahl von Sensoren 2 detektierbar sind. Die Zahl n hängt dabei stark von den im Tunnel verwendeten Sensoren 2 ab, welche eine Detektion der verschiedenen Ereignisse ermöglichen. Bei den in Fig. 1 schematisch abgebildeten Sensoren 2 handelt es sich um eine Brandmeldeanlage, ein Kohlenmonoxid-Messgerät, ein Trübsichtmessgerät, einen Videodetektor, einen akustischen Unfalldetektor und eine Zählschleife. Es können mehrere gleiche Sensoren 2 an unterschiedlichen Stellen im Tunnel angebracht sein. Die gleichen Sensoren 2 können dann über den Zeitraum t dasselbe Signal mehrmals messen. Beispielsweise kann am Anfang und am Ende vom Tunnel eine Brandmeldeanlage angebracht sein, welche bei Ausbreitung eines Brandes über den gesamten Tunnel sowohl am Anfang vom Tunnel, als auch am Ende vom Tunnel das Ereignis Brand detektiert. Die in Fig. 1 dargestellten Sensoren 2 sind nur Beispiele von möglichen Sensoren 2, es können auch weitere Sensoren 2 zur Detektion von Ereignissen in Straßentunnel verwendet werden. Aus den über den Zeitraum t empfangenen Sensordaten S wird ein Merkmalsvektor V erstellt. Jede Dimension des Merkmalsvektors V entspricht der Detektionsanzahl eines Ereignisses. Dabei können gleiche oder verschiedene Sensoren S ein und dasselbe Ereignis detektieren und dessen Detektionsanzahl somit im Zeitraum t erhöhen. Der Zeitraum t ist dabei beliebig wählbar und entspricht im Wesentlichen einem Sliding-Window. Beispielsweise können über ein Sliding-Window von t = 30 s Sensordaten S gesammelt werden und diese danach in einem Merkmalsvektor V abgebildet werden. Der Zeitraum t kann aber auch beliebig größer oder kleiner gewählt werden und beispielsweise auch an die Länge des Tunnels angepasst werden, um eine optimale Klassifikation der Ereignisse zu ermöglichen. Über diesen Zeitraum t wird dann die Anzahl aller Ereignisse aller Sensoren gezählt und anhand des Merkmalsvektors V zusammengefasst. Schlussendlich kann anhand von n trainierten Ereignis-Klassifikatoren 1 eine Klassifikation K des Merkmalsvektors V erhalten werden. Die Klassifikation K beinhaltet die Information, ob und welches Ereignis eingetreten ist. In der Klassifikation K gibt jeder der n Ereignis-Klassifikatoren 1 an, ob das zugehörige Ereignis eingetreten ist. Dies kann beispielsweise als binäre Information vorliegen, d.h. als Ja/Nein-Aussage oder auch durch eine Wahrscheinlichkeit abgebildet sein. Hierfür sind weiter unten noch Beispiele angegeben.

Bevor die Ereignis-Klassifikatoren 1 eine genaue Klassifikation K des Merkmalsvektors V und damit eines Ereignisses ermöglichen, müssen diese trainiert werden. In Fig. 2 ist schematisch ein Ablaufplan eines solchen Trainings dargestellt. Erfindungsgemäß werden die Ereignis-Klassifikatoren 1 trainiert, indem die als Machine-Learning-Algorithmus ausgebildeten Ereignis-Klassifikatoren 1 nach der erfolgten Klassifikation K von einem Bediener über eine Bedienerschnittstelle als richtig oder falsch bewertet werden. Bei der Bedienerschnittstelle kann es sich um eine computerbasierte Bedienerschnittstelle wie z.B. eine grafische oder natürliche Bedienerschnittstelle handeln. Beispielsweise kann der Bediener auf einem Bildschirm auswählen, ob die Klassifikation K falsch oder richtig war. Basierend auf dieser bewerteten Klassifikation B lernen die Ereignis-Klassifikatoren 1 solange, bis eine Bewertung der Klassifikation K nicht mehr notwendig ist.

Wie in Fig. 2 ersichtlich, werden im Training in einem ersten Schritt 100 über einen frei wählbaren Zeitraum t, welcher im Wesentlichen einem Sliding-Window entspricht, Sensordaten S gesammelt. Die über den Zeitraum t gesammelten Sensordaten S können detektierte Ereignisse beinhalten, welche im Merkmalsvektor V in einem zweiten Schritt 200 zusammengefasst werden. Sollten die Sensordaten S keine Ereignisse beinhalten, würde der Merkmalsvektor V einem n-dimensionalen Nullvektor entsprechen. Nach dem zweiten Schritt 200 kann der erstellte Merkmalsvektor V dann den Ereignis-Klassifikatoren 1 in einem dritten Schritt 300 übergeben werden. In diesem Schritt 300 wird für jeden der n Ereignis-Klassifikatoren 1 ausgewertet, ob das zugehörige Ereignis eingetreten ist oder nicht. Diese Auswertung ergibt die Klassifikation K des Merkmalsvektors V, welche angibt, ob ein oder mehrere bestimmte Ereignisse eingetreten sind oder ob kein Ereignis eingetreten ist. In einem vierten Schritt 400 wird die Klassifikation K an einen Bediener weitergeleitet, welcher über die Bedienerschnittstelle bewerten kann, ob die Klassifikation K richtig oder falsch ist. Der Bediener kann die Klassifikation K beispielsweise anhand eines Ereignis-Videos bewerten. Außerdem kann der Bediener z.B. auch Zugriff auf alle Sensordaten S haben und anhand dieser Daten eigenständig überprüfen, ob ein Ereignis eingetreten ist oder nicht.

Nach der Bewertung durch den Bediener wird somit eine bewertete Klassifikation B erhalten, welche in einem letzten Schritt 500 an die Ereignis-Klassifikatoren 1 übergeben wird und ein Lernen des verwendeten Machine-learning-Algorithmus ermöglicht.

Wie in Fig. 3 schematisch dargestellt kann im Training und auch zur schlussendlichen Darstellung der Klassifikation K ein Nutzerinterface verwendet werden. Das Nutzerinterfaces kann auch Teil des Systems sein, welches es ermöglicht, die erfindungsgemäßen Verfahren zum Training der Ereignis-Klassifikatoren sowie zur Sensorfusion auszuführen. Dieses Nutzerinterface kann beispielsweise einen Bildschirm umfassen. Die Klassifikation K kann an das Nutzerinterface übergeben werden. Das Nutzerinterface kann einerseits verschiedene Sensor-Ereignisse S1 - S3 aus den Sensordaten S darstellen, welche in Fig. 3 auf der linken Seite abgebildet sind. Diese Sensor-Ereignisse S1 - S3 können Ereignisse darstellen, welche von einem Sensor S detektiert wurden. Andererseits kann das Nutzerinterface auch verschiedene Fusions-Ereignisse K1 - K3 zu den verarbeiteten Sensordaten S mittels erfindungsgemäßer Sensorfusion darstellen, welche in Fig. 3 auf der rechten Seite abgebildet sind. Das heißt die verarbeiteten Fusions-Ereignisse K1- K3 entsprechen im Wesentlichen den Ergebnissen der n Ereignis-Klassifikatoren 1. Die Anzahl der Sensor-Ereignisse S1, S2, S3 und die Anzahl der Fusions-Ereignisse K1, K2, K3 hängt wiederum von der Anzahl der im Tunnel detektierbaren Ereignisse mittels Sensoren S ab und ist nicht auf die beispielhaft in Fig. 3 dargestellte Anzahl beschränkt. Bei den Ereignissen kann es sich beispielsweise um Geisterfahrer, Aufprall/Platzer, Langsamfahrer, Stillstand, Stau, Brand/-Rauch, etc. handeln. Das Nutzerinterface kann auch Störungs-Ereignisse ST1, ST2 der Sensoren S anzeigen, wie z.B. eine Störung oder ein Ausfall des Kamerasystems. Außerdem kann das Nutzerinterface Alarmsignale SA, KA anzeigen, welche in der beispielhaften Ausführungsvariante in Fig. 3 mittig angeordnet sind. Es kann ein Sensor-Alarmsignal SA anzeigen, welches angezeigt wird, sobald ein Sensor S ein Ereignis detektiert, das heißt, sobald mindestens ein Sensor Ereignis S1, S2, S3 angezeigt wird. Außerdem kann es ein Klassifikations-Alarmsignal KA anzeigen, welches angezeigt wird, sobald ein Ereignis-Klassifikator 1 ein Ereignis detektiert, das heißt, sobald mindestens ein Fusions-Ereignis K1, K2, K3 angezeigt wird. Ein Bediener kann im Lernprozess der Ereignis-Klassifikatoren 1 mithilfe des Nutzerinterfaces somit sehr schnell erkennen, ob ein Ereignis von der Klassifikation K als eingetreten bewertet wurde und mithilfe der Fusions-Ereignisse K1 - K3 überprüfen, welcher Ereignis-Klassifikator 1 das Ereignis als eingetreten klassifizierte. Zugleich kann der Bediener vergleichen, welche Sensor-Ereignisse eingetreten sind. Es kann auch der Fall eintreten, dass das Sensor-Alarmsignal SA angezeigt wird, aber das Klassifikations-Alarmsignal KA nicht, da in der Klassifikation K das Sensor-Ereignis S1, S2, S3 als falsch-positives Ereignis, das heißt als Fehlalarm, klassifiziert wurde. Außerdem kann mithilfe der Störungs-Ereignisse ST1, ST2 von einem Bediener überprüft werden, ob das Kamerasystem, auf welchem seine Bewertung der Klassifikation K beruht, funktioniert.

Auf einem Bildschirm können die Signale beispielsweise mittels Farbkodierung angezeigt werden. Beispielsweise könnte ein grünes Signal bedeuten, dass kein Ereignis eingetreten ist und ein rotes Signal, dass ein Ereignis eingetreten ist.

Beispiele:

Nachfolgend werden Klassifikationsergebnisse von verschiedenen, trainierten Ereignis-Klassifikatoren für Ereignisse, welche typischerweise in einem Tunnelbetrieb auftreten können, vorgestellt. Hierfür wurden die Ereignis-Klassifikatoren vorab mittels erfindungsgemäßen Verfahren trainiert, um anschließend auf unbekannte Echtdaten aus dem operativen Tunnelbetrieb angewendet werden zu können und deren Erkennungsleistung zu beurteilen. Für die einzelnen Ereignis-Klassifikatoren wird jeweils die Detektionsleistung für verschiedene Machine-Learning-Algorithmen angegeben, wobei die Detektionsleistung durch einen Wert zwischen 0 und 1 angegeben wird. Ein Wert von 1 bedeutet, dass der Ereignis-Klassifikator in der Lage war, alle Stichproben aus dem Testset korrekt zuzuordnen. Zudem wird für jeden Ereignis-Klassifikator angegeben, wie viele Sensordaten insgesamt verfügbar war, und wie viele Sensordaten zum Anlernen des Ereignis-Klassifikators verwendet wurden. Zudem wird angegeben, wie viele Sensordaten zur Angabe der Detektionsleistung verwendet wurden.

Die Ergebnisse der Sensorfusion werden dann mit einer deterministischen Heuristik auf Basis der Einzelalarme der Sensoren verglichen. Dafür wurde festgelegt, dass ein Ereignis gemeldet wird, sobald ein Einzelsensor zweimal hintereinander ausgelöst wurde. Dieser Schwellwert wird so gewählt, dass gewährleistet ist, dass kein tatsächliches Ereignis übersehen wird. Beispielsweise würde also ein Sensor, welcher Geisterfahrer direkt erkennt, erst nach zweimaliger Auslösung zur Meldung des Ereignisses Geisterfahrer führen.

1. Langsam fahrendes Fahrzeug:

In nachfolgender Tabelle sind die zur Verfügung stehenden Sensordaten für das Anlernen und Beurteilen des Ereignis-Klassifikators "langsam fahrendes Fahrzeug" angegeben. Hierbei ist hervorzuheben, dass im Gesamtset nur eine einzige Stichprobe mit einem negativen Label zur Verfügung stand, das heißt ein Ereignis, bei welchem ein schnell fahrendes Fahrzeug detektiert wurde.

| Set | Anzahl Labels | Positive Labels | Negative Labels |
|---|---|---|---|
| Gesamtset | 344 | 343 | 1 |
| Trainingsset | 206 | 205 | 1 |
| Testset | 138 | 138 | 0 |

Der Ereignis-Klassifikator wurde nur mit den beiden Einzelereignissen "Stillstand" und "Langsamfahrer" angelernt, für welche separate Messungen der Tunnelsensorik vorliegen. Es wurden 8 auf unterschiedliche Machine-Learning-Algorithmen basierende Ereignis-Klassifikatoren trainiert. Es wurde auch untersucht, wie diese verschiedenen Ereignis-Klassifikatoren die Einzelereignissen Stillstand und Langsamfahrer nach der Fusion im Zusammenspiel bewerten.

Ein auf den Nearest Neighbor-Algorithmus basierender Ereignis-Klassifikator unterteilt Merkmalsvektoren in zwei Bereiche. Dabei werden Merkmalsvektoren, die einen Bereich fallen als nicht zur Klasse langsam fahrendes Fahrzeug gehörend erkannt, während Merkmalsvektoren im anderen Bereich als der Klasse zugehörig markiert werden.

Aufgrund der für das Training verwendeten Sensordaten, die ein Negativsample mit einem Merkmalsvektor für das Einzelereignis Langsamfahrer = 2 enthalten, bildet sich um diesen Bereich eine Fläche heraus, die der Ereignis-Klassifikator als nicht dieser Klasse zugehörig einstuft.

Der Ereignis-Klassifikator auf Basis einer linearen SVM teilt die Merkmalsvektoren ebenfalls auf Grund der Trainingsdaten. Allerdings liefert er nicht nur eine binäre Aussage, sondern gibt über die Wahrscheinlichkeit ein Maß für die Sicherheit aus. Durch die lineare Trenngerade, kann der Ereignis-Klassifikator allerdings auch scheinbar belastbare Aussagen treffen, in Bereichen, in denen er niemals Testdaten gesehen hat. Beispielsweise würde er auch für einen Merkmalsvektor mit Langsamfahrer = 6 und Stillstand = 0.5 eine sehr hohe Klassenzugehörigkeit ausgeben. Erweitert man die SVM mittels eines RFB-Kernels ändert sich dieses Verhalten und der Ereignis-Klassifikator ist nun deutlich defensiver und damit konsitenter. Er liefert nun in Bereichen, in denen er kein Wissen anlernen konnte, eine Klassenzugehörigkeit von ca. 0.5 was wahrscheinlichkeitstheoretisch dem Nichtwissen entspricht.

Ein Ereignis-Klassifikator basierend auf dem Decision-Tree Algorithmus markiert einen Bereich der Merkmalsvektoren, der durch zwei horizontale Grenzen festgelegt ist und liefert in dieser Konfiguration auch nur eine binäre Aussage für die Klassenzugehörigkeit.

Wird die Möglichkeit eines Random Forests genutzt, d.h. die Parallelschaltung mehrerer Decision Trees, ergibt sich eine neue Fläche in der Merkmalsvektoren als nicht zur Klasse zugehörig erkannt werden.

Die erreichte Detektionsleistung der einzelnen Klassifikatoren für den Fall eines Langsamfahrers im Tunnel unter Berücksichtigung des kompletten Merkmalsvektors ist in nachstehender Tabelle zusammengefasst.

| Klassifikatortyp | Detektionsleistung (1.0 entspricht 100% korrekt) |
|---|---|
| Nearest Neighbors | 1.0 |
| Linear SVM | 1.0 |
| RBF SVM | 1.0 |

(fortgesetzt)

| Klassifikatortyp | Detektionsleistung (1.0 entspricht 100% korrekt) |
|---|---|
| Decision Tree | 1.0 |
| Random Forest | 1.0 |
| AdaBoost | 1.0 |
| Naive Bayes | 0.978260869565 |
| LDA | 0.940170940171 |
| Sensorrohdaten (Heuristik: Alarme > 1) | 0.0289855072464 |

Alle gelernten Ereignis-Klassifikatoren haben für Testdaten eine Erkennungsleistung von nahezu 100%. Ausschließlich der naive Bayes Klassifikator sowie die LDA erreichen diesen Wert nicht vollständig. Es ist auch zu erkennen, dass die einfache Testheuristik nur eine Detektionsleistung von ca. 3% erreicht, damit eine sehr hohe Falschalarmrate hat.

2. Rauch im Tunnel:

Die Anzahl der zur Verfügung stehenden und genutzten Sensordaten für das Anlernen und Beurteilen des Ereignis-Klassifikators "Rauch" ist in nachfolgender Tabelle zusammengefasst.

| Set | Anzahl Labels | Positive Labels | Negative Labels |
|---|---|---|---|
| Gesamtset | 72 | 48 | 24 |
| Trainingsset | 38 | 37 | 1 |
| Testset | 34 | 34 | 0 |

Es wurden wiederum mehrere Ereignis-Klassifikatoren basierend auf unterschiedlichen Machine-Learning-Algorithmen angelernt. Dabei wurde der Ereignis-Klassifikator ausschließlich mit den Merkmalen "Brand/Rauch" und "Langsamfahrer" angelernt. Die Wahl der beiden Merkmale basiert auf der Annahme, dass es bei einer Rauchentwicklung im Tunnel mit hoher Wahrscheinlichkeit auch zu einem Stau durch langsam fahrende Fahrzeuge kommt. Beide Ereignisse liegen als separate Messungen der Tunnelsensorik vor. Die erreichte Detektionsleistung der einzelnen Ereignis-Klassifikatoren für den Fall von Rauch im Tunnel unter Berücksichtigung des kompletten Merkmalsvektors ist in nachfolgender Tabelle zu sehen.

| Klassifikatortyp | Detektionsleistung (1.0 entspricht 100% korrekt) |
|---|---|
| Nearest Neighbors | 0.9375 |
| Linear SVM | 0.9375 |
| RBF SVM | 0.9375 |
| Decision Tree | 0.9375 |
| Random Forest | 0.9375 |
| AdaBoost | 0.9375 |
| Naive Bayes | 0.125 |
| LDA | 0.9375 |
| Sensorrohdaten (Heuristik: Alarme > 1) | 0.9375 |

3. Stehendes Fahrzeug:

Die Anzahl der zur Verfügung stehenden und genutzten Sensordaten für das Anlernen und Beurteilen des Ereignis-Klassifikators "Stehendes Fahrzeug" ist in nachfolgender Tabelle zusammengefasst.

| Set | Anzahl Labels | Positive Labels | Negative Labels |
|---|---|---|---|
| Gesamtset | 585 | 174 | 411 |
| Trainingsset | 351 | 111 | 240 |
| Testset | 234 | 63 | 171 |

Hier ist hervorzuheben, dass für diesen Ereignis-Klassifikator ausreichend Testdaten sowohl in der Klasse der positiven als auch negativen Label zur Verfügung standen. Der Ereignis-Klassifikator wurde ausschließlich mit den beiden Merkmalen "Stillstand" und "Langsamfahrer" angelernt. Beide Ereignisse liegen als separate Messungen der Tunnelsensorik vor. Die erreichte Detektionsleistung der einzelnen Ereignis-Klassifikatoren für den Fall eines stehenden Fahrzeuges unter Berücksichtigung des kompletten Merkmalsvektors ist in nachfolgender Tabelle zu sehen.

| Klassifikatortyp | Detektionsleistung (1.0 entspricht 100% korrekt) |
|---|---|
| Nearest Neighbors | 0.935897435897 |
| Linear SVM | 0.935897435897 |
| RBF SVM | 0.935897435897 |
| Decision Tree | 0.935897435897 |
| Random Forest | 0.935897435897 |
| AdaBoost | 0.935897435897 |
| Naive Bayes | 0.735042735043 |
| LDA | 0.940170940171 |
| Sensorrohdaten (Heuristik: Alarme > 1) | 0.290598290598 |

Fast alle Ereignis-Klassifikatoren erreichen eine Detektionsleistung von ca. 93% und sind somit der Einalarm-Heuristik, die ca. 30% Detektionsleistung erreicht um den Faktor 3 überlegen. Das etwas schlechtere Ergebnis des naiven Bayes-Klassifikators mit nur 73% ist auf die explizite Nichtmodellierung der Korrelation zwischen den einzelnen Merkmalen zurückzuführen.

4. Geisterfahrer:

Die Anzahl der zur Verfügung stehenden und genutzten Sensordaten für das Anlernen und Beurteilen des Ereignis-Klassifikators "Geisterfahrer" ist in nachfolgender Tabelle zusammengefasst.

| Set | Anzahl Labels | Positive Labels | Labels Negative |
|---|---|---|---|
| Gesamtset | 169 | 166 | 3 |
| Trainingsset | 101 | 99 | 2 |
| Testset | 68 | 67 | 1 |

Es ist hervorzuheben, dass für dieses Ereignis kaum gelabelte Negativbeispiele zur Verfügung standen.
Der Ereignis-Klassifikator wurde ausschließlich mit den beiden Merkmalen "Geisterfahrer" und "Langsamfahrer" angelernt. Beide Ereignisse liegen als separate Messungen der Tunnelsensorik vor. Die erreichte Detektionsleistung der einzelnen Ereignis-Klassifikatoren für den Fall des Geisterfahrers unter Berücksichtigung des kompletten Merkmalsvektors ist in nachfolgender Tabelle zu sehen.

| Klassifikatortyp | Detektionsleistung (1.0 entspricht 100% korrekt) |
|---|---|
| Nearest Neighbors | 0.985294117647 |
| Linear SVM | 0.985294117647 |
| RBF SVM | 0.985294117647 |

(fortgesetzt)

| Klassifikatortyp | Detektionsleistung (1.0 entspricht 100% korrekt) |
|---|---|
| Decision Tree | 0.970588235294 |
| Random Forest | 0.970588235294 |
| AdaBoost | 0.985294117647 |
| Naive Bayes | 0.970588235294 |
| LDA | 0.985294117647 |
| Sensorrohdaten (Heuristik: Alarme > 1) | 0.220588235294 |

**Patentansprüche**

1. Verfahren zum Trainieren eines Ereignis-Klassifikators (1) zur Verwendung in einem Verfahren zur Sensorfusion von Sensoren (2) in Straßentunnel umfassend die Schritte:

   • Empfangen von Sensordaten (S) von einer Vielzahl von Sensoren (2) in einem Straßentunnel über einen Zeitraum (t), wobei im Straßentunnel n verschiedene Ereignisse mit der Vielzahl von Sensoren (2) detektierbar sind,
   • Erstellen eines Merkmalsvektors (V),
   • Klassifikation (K) des Merkmalsvektors (V) durch n als Machine-Learning-Algorithmus ausgebildete Ereignis-Klassifikatoren (1),
   • Bewerten der Klassifikation (B) als richtig oder falsch,
   • Lernen der n Ereignis-Klassifikatoren (1) basierend auf der bewerteten Klassifikation (B), **dadurch gekennzeichnet, dass**

   die Sensordaten (S) detektierte Ereignisse im Straßentunnel umfassen,
   wobei der Merkmalsvektor (V) n-dimensional ist,
   wobei jede Dimension des Merkmalsvektors (V) der Detektionsanzahl eines Ereignisses entspricht,
   wobei das Bewerten der Klassifikation (B) als richtig oder falsch durch einen Bediener über eine Bedienerschnittstelle erfolgt.

2. Verfahren nach Anspruch 1, wobei der Bediener die Klassifikation (K) anhand eines Ereignis-Videos bewertet.

3. Verfahren zur Sensorfusion von Sensoren (2) in Straßentunnel umfassend die Schritte:

   • Empfangen von Sensordaten (S) von einer Vielzahl von Sensoren (2) in einem Straßentunnel über einen Zeitraum (t), wobei die Sensordaten (S) detektierte Ereignisse im Straßentunnel umfassen, wobei im Straßentunnel n verschiedene Ereignisse mit der Vielzahl von Sensoren (2) detektierbar sind,
   • Erstellen eines n-dimensionalen Merkmalsvektors (V), wobei jede Dimension des Merkmalsvektors (V) der Detektionsanzahl eines Ereignisses entspricht,
   • Klassifikation (K) des Merkmalsvektors (V) durch n trainierte Ereignis-Klassifikatoren (1),

   **dadurch gekennzeichnet, dass** die Ereignis-Klassifikatoren (1) mittels eines Verfahrens nach einem der Ansprüche 1 oder 2 trainiert werden.

4. Verfahren nach einem der vorhergehenden Ansprüche, wobei ein Neareast-Neighbour-Algorithmus, Naive Bayes, eine Support Vector Machine (SVM), Adaptive Boosting, XGBoost, eine lineare Diskriminanzanalyse, Decision Tree oder ein Random Forrest als Machine-Learning-Algorithmus verwendet wird.

5. Verfahren nach einem der Ansprüche 1 bis 4, wobei die Vielzahl von Sensoren (2) ausgewählt sind aus der Gruppe umfassend Radar Sensoren, Laser Sensoren, Videodetektoren, Wechsellichtschranken, Induktionsschleifen, Laser Reflektions-Lichtschranken, Infrarot Einweg-Lichtschranken, Infrarot Doppel-Lichtschranken, Temperaturfühler, akustische Unfalldetektoren (AKUT), Linienbrandmeldekabel, Brand-/Rauchdetektionsgeräte, Rauchmelder, Trübsichtmessgeräte, Gefahrgutplakettenlesegeräte, CO-Messgeräte, NOx-Messgeräte.

6. System, umfassend einen Computer, der dazu programmiert ist, die Verfahren nach einem der Ansprüche 1 - 5 durchzuführen.

**Claims**

1. Method for training an event classifier (1) for use in a method for sensor fusion of sensors (2) in road tunnels, comprising the steps:

   • receiving sensor data (S) from a plurality of sensors (2) in a road tunnel over a period of time (t), wherein n different events can be detected in the road tunnel using the plurality of sensors (2),
   • creating a feature vector (V),
   • classifying (K) the feature vector (V) by n event classifiers (1) trained as machine learning algorithms,
   • evaluating the classification (B) as correct or incorrect,
   • learning the n event classifiers (1) based on the evaluated classification (B), **characterised in that**

   the sensor data (S) comprises detected events in the road tunnel,
   wherein the feature vector (V) is n-dimensional,
   wherein each dimension of the feature vector (V) corresponds to the detection count of an event,
   wherein the classification (B) is evaluated as correct or incorrect by an operator via an operator interface.

2. Method according to claim 1, wherein the operator evaluates the classification (K) on the basis of an event video.

3. Method for sensor fusion of sensors (2) in road tunnels comprising the steps:

   • receiving sensor data (S) from a plurality of sensors (2) in a road tunnel over a period of time (t), wherein the sensor data (S) comprises detected events in the road tunnel, wherein n different events can be detected in the road tunnel with the plurality of sensors (2),
   • creating an n-dimensional feature vector (V), wherein each dimension of the feature vector (V) corresponds to the detection count of an event,
   • classifying (K) the feature vector (V) by n trained event classifiers (1),

   **characterised in that** the event classifiers (1) are trained using a method according to one of claims 1 or 2.

4. Method according to one of the preceding claims, wherein a nearest neighbour algorithm, Naive Bayes, a support vector machine (SVM), adaptive boosting, XGBoost, linear discriminant analysis, decision tree or random forest is used as a machine learning algorithm.

5. Method according to one of claims 1 to 4, wherein the plurality of sensors (2) are selected from the group comprising radar sensors, laser sensors, video detectors, alternating light barriers, induction loops, laser reflection light barriers, infrared single-beam light barriers, infrared double-beam light barriers, temperature sensors, acoustic accident detectors (AKUT), line fire detection cables, fire/smoke detection devices, smoke detectors, visibility meters, hazardous goods label readers, CO measuring devices, NOx measuring devices.

6. System comprising a computer programmed to perform the methods according to any one of claims 1 to 5.

**Revendications**

1. Procédé d'entraînement d'un classificateur d'événements (1) destiné à être utilisé dans un procédé pour la fusion de capteurs (2) dans des tunnels routiers, comprenant les étapes suivantes:

   • recevoir des données de capteur (S) provenant d'une pluralité de capteurs (2) dans un tunnel routier sur une période de temps (t), n événements différents étant détectables dans le tunnel routier avec la pluralité de capteurs (2),
   • créer un vecteur caractéristique (V),
   • classifier (K) le vecteur caractéristique (V) par n classificateurs d'événements (1) conçus comme un algorithme d'apprentissage automatique,

• considérer la classification (B) comme correcte ou incorrecte,
• apprendre des n classificateurs d'événements (1) à partir de la classification évaluée (B),

**caractérisé en ce que**

les données de capteur (S) comprennent des événements détectés dans le tunnel routier,
le vecteur caractéristique (V) étant n-dimensionnel,
chaque dimension du vecteur caractéristique (V) correspondant au nombre de détections d'un événement,
la considération de la classification (B) comme correcte ou incorrecte étant effectuée par un opérateur via une interface opérateur.

2. Procédé selon la revendication 1, dans lequel l'opérateur évalue la classification (K) à partir d'une vidéo d'événement.

3. Procédé pour la fusion de capteurs (2) dans des tunnels routiers, comprenant les étapes suivantes:

• recevoir des données de capteur (S) provenant d'une pluralité de capteurs (2) dans un tunnel routier sur une période de temps (t), les données de capteur (S) comprenant des événements détectés dans le tunnel routier, n événements différents étant détectables dans le tunnel routier avec la pluralité de capteurs (2),
• créer un vecteur caractéristique à n dimensions (V), chaque dimension du vecteur caractéristique (V) correspondant au nombre de détections d'un événement,
• classifier (K) le vecteur caractéristique (V) par n classificateurs d'événements (1) entraînés,

**caractérisé en ce que** les classificateurs d'événements (1) sont entraînés au moyen d'un procédé selon l'une des revendications 1 ou 2.

4. Procédé selon l'une des revendications précédentes, dans lequel un algorithme du plus proche voisin, Naïve Bayes, une machine à vecteurs de support (SVM), le boosting adaptatif, XGBoost, l'analyse discriminante linéaire, un arbre de décision ou une forêt aléatoire est utilisé comme algorithme d'apprentissage automatique.

5. Procédé selon l'une des revendications 1 à 4, dans lequel la pluralité de capteurs (2) sont choisis dans le groupe comprenant les capteurs radar, les capteurs laser, les détecteurs vidéo, les barrières lumineuses de change, les boucles d'induction, les barrières lumineuses à réflecteur laser, les barrières lumineuses infrarouges jetables, les barrières lumineuses infrarouges doubles, les capteurs de température, les détecteurs acoustiques d'accidents (AKUT), les câbles linéaires d'alarme incendie, les dispositifs de détection d'incendie/de fumée, les détecteurs de fumée, les turbidimètres, les dispositifs de lecture d'étiquettes de matières dangereuses, les appareils de mesure de CO, les appareils de mesure de NOx.

6. Système comprenant un ordinateur programmé pour exécuter les procédés selon l'une des revendications 1 à 5.

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1376510 A2